(19) Europäisches Patentamt
European Patent Office
Office européen des brevets

(11) EP 2 598 871 B1

## (12) FASCICULE DE BREVET EUROPEEN

(45) Date de publication et mention de la délivrance du brevet:
**09.04.2014 Bulletin 2014/15**

(21) Numéro de dépôt: **11752288.8**

(22) Date de dépôt: **25.07.2011**

(51) Int Cl.:
*G01N 29/26* (2006.01)    *G01S 7/52* (2006.01)
*G10K 11/34* (2006.01)

(86) Numéro de dépôt international:
**PCT/FR2011/051789**

(87) Numéro de publication internationale:
**WO 2012/022886 (23.02.2012 Gazette 2012/08)**

(54) **PROCEDE DE COMMANDE DE TRANSDUCTEURS D'UNE SONDE A ULTRASONS, PROGRAMME D'ORDINATEUR CORRESPONDANT ET DISPOSITIF DE SONDAGE A ULTRASONS**

VERFAHREN ZUR STEUERUNG EINER ULTRASCHALLSONDENVORRICHTUNG, ENTSPRECHENDES COMPUTERPROGRAMM UND ULTRASCHALLSONDENVORRICHTUNG

ULTRASONIC TRANSDUCER CONTROL METHOD, CORRESPONDING COMPUTER PROGRAM AND ULTRASONIC PROBE DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.07.2010 FR 1056217**

(43) Date de publication de la demande:
**05.06.2013 Bulletin 2013/23**

(73) Titulaire: **Commissariat à l'Énergie Atomique et aux Énergies Alternatives
75015 Paris (FR)**

(72) Inventeurs:
• **ROBERT, Sébastien
F-93400 Saint-Ouen (FR)**
• **CASULA, Olivier
F-91310 Longpont sur Orge (FR)**
• **NADIM, Arnaud
F-92290 Châtenay Malabry (FR)**

(74) Mandataire: **Bonnet, Michel
Cabinet Bonnet
93, rue Réaumur
75002 Paris (FR)**

(56) Documents cités:
**US-A1- 2006 195 273    US-A1- 2009 211 361
US-B2- 7 516 664**

• **PRADA C ET AL: "THE ITERATIVE TIME REVERSAL PROCESS: ANALYSIS OF THE CONVERGENCE", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 97, no. 1, 1 janvier 1995 (1995-01-01), pages 62-71, XP000491233, ISSN: 0001-4966, DOI: DOI:10.1121/1.412285**

## Description

La présente invention concerne un procédé de commande de transducteurs d'une sonde à ultrasons, un programme d'ordinateur correspondant et un dispositif de sondage à ultrasons.

L'invention s'applique notamment au domaine du contrôle non destructif de pièces mécaniques ayant une forme complexe, en particulier lors d'un contrôle en immersion, dans lequel une pièce mécanique est plongée dans un liquide pour être sondée à distance, par exemple dans le secteur aéronautique. Elle peut également s'appliquer au domaine médical.

Elle concerne plus précisément un procédé de commande de transducteurs à ultrasons d'une sonde à ultrasons dans le but de sonder un objet, comportant les étapes suivantes :

- commander les transducteurs afin qu'ils émettent vers l'objet des ondes ultrasonores ayant des retards d'émission initiaux $E°$ les unes par rapport aux autres,
- recevoir depuis les transducteurs des signaux de mesure $S^0$, mesurant en particulier des échos dus à des réflexions des ondes ultrasonores sur l'objet,
- déterminer des retards d'émission complémentaires $E^1$ à partir des signaux de mesure $S^0$, et
- commander les transducteurs afin qu'ils émettent vers l'objet des ondes ultrasonores ayant des retards d'émission $L^1$ les unes par rapport aux autres, les retards d'émission $L^1$ ayant été déterminés à partir des retards d'émission initiaux $E^0$ et des retards d'émission complémentaires $E^1$.

On connaît, de la demande de brevet publiée sous le numéro US 2006/0195273, un procédé qui divulgue ces étapes.

Plus précisément, ce document décrit un procédé selon lequel l'étape de détermination des retards d'émission complémentaires $E^1$ à partir des signaux de mesure $S^0$ consiste à procéder en deux temps : tout d'abord, une estimation du contour de l'objet est calculée de façon explicite à partir des signaux de mesure $S^0$ obtenus à l'occasion d'un premier tir ; puis une loi de retards pouvant être assimilée aux retards d'émission complémentaires $E^1$ est calculée à partir de ce contour et appliquée à l'occasion d'un second tir.

Plus précisément également, dans ce document, les retards d'émission initiaux sont des retards nuls. Au second tir, il n'y a donc pas explicitement de retards d'émission $L^1$ déterminés à partir des retards d'émission initiaux $E^0$ et des retards d'émission complémentaires $E^1$, la loi de retard étant directement établie à partir du contour estimé de l'objet.

Ce procédé a été mis au point pour le contrôle de structures complexes en composites stratifiés, c'est-à-dire une matrice de résine organique renforcée avec des tissus de fibres de carbone, et s'applique en particulier à la détection de défauts de type délaminage d'orientation quasi parallèle à la surface de la pièce. Il permet de former un front d'onde incident de même courbure que la surface de la pièce, ce qui minimise la distorsion du faisceau ultrasonore incident à son entrée dans la pièce. La transmission du faisceau dans la pièce est ainsi optimisée, ce qui favorise la détection de défauts dans la pièce par rapport à une émission ultrasonore non adaptée. La détection et la localisation des défauts s'effectuent par l'analyse du B-scan obtenu (représentation cumulée des N signaux de mesure reçus par les N transducteurs de la sonde). Ce procédé est particulièrement adapté aux matériaux composites stratifiés pour lesquels les plis ont une orientation quasi parallèle à la surface et participent, de fait, à la dégradation du faisceau ultrasonore transmis si celui-ci n'est pas adapté à la géométrie de l'objet. En outre, ce procédé n'est pas restreint à ce type de matériaux, il peut aussi être appliqué pour le contrôle d'autres matériaux, par exemple métalliques avec des défauts de type inclusions.

Néanmoins, l'utilisation de ce procédé à des objets présentant une géométrie très complexe, c'est-à-dire entre autres une surface très différente d'une surface sensiblement plane, fournit un B-scan qui n'est pas exploitable car encore trop bruité. Notamment, lorsque la surface de l'objet présente localement un rayon de courbure faible par rapport aux dimensions de la sonde, de fortes interférences entre les ondes réfléchies par l'objet subsistent et altèrent la représentation du B-scan.

Il peut ainsi être souhaité d'améliorer les procédés de commande de transducteurs existants afin de permettre le contrôle d'objets de géométrie très complexe.

L'invention a donc pour objet un procédé de commande de transducteurs à ultrasons d'une sonde à ultrasons dans le but de sonder un objet, comportant les étapes suivantes :

- commander les transducteurs afin qu'ils émettent vers l'objet des ondes ultrasonores ayant des retards d'émission initiaux $E^0$ les unes par rapport aux autres,
- recevoir depuis les transducteurs des signaux de mesure $S^0$, mesurant en particulier des échos dus à des réflexions des ondes ultrasonores sur l'objet,
- déterminer des retards d'émission complémentaires $E^1$ à partir des signaux de mesure $S^0$,
- commander les transducteurs afin qu'ils émettent vers l'objet des ondes ultrasonores ayant des retards d'émission $L^1$ les unes par rapport aux autres, les retards d'émission $L^1$ ayant été déterminés à partir des retards d'émission initiaux $E^0$ et des retards d'émission complémentaires $E^1$,

et comportant en outre les étapes suivantes, itérées au moins une fois, le numéro d'itération étant noté $p$ :

- recevoir depuis les transducteurs des nouveaux signaux de mesure $S^p$, mesurant des échos dus à des réflexions des ondes ultrasonores sur l'objet, les ondes ultrasonores ayant des retard d'émission $L^p$ les unes par rapport aux autres, les retards d'émission $L^p$ ayant été déterminés à partir des retards d'émission initiaux $E^0$ et de tous les retards d'émission complémentaires $E^1...E^p$ déterminés auparavant,

- déterminer de nouveaux retards d'émission complémentaires $E^{p+1}$ à partir des nouveaux signaux de mesure $S^p$,
- commander les transducteurs afin qu'ils émettent des ondes ultrasonores vers l'objet, les ondes ultrasonores ayant des retard d'émission $L^{p+1}$ les unes par rapport aux autres, les retards d'émission $L^{p+1}$ ayant été déterminés à partir des retards d'émission initiaux $E^0$ et de tous les retards d'émission complémentaires $E^1...E^{p+1}$ déterminés auparavant.

Ainsi, grâce à l'invention, il est possible de déterminer des retards d'émission permettant aux ondes ultrasonores d'atteindre sensiblement simultanément l'objet à sonder, et cela, en quelques itérations seulement et quelle que soit la complexité de l'objet.

De façon optionnelle, l'étape, lors de laquelle de nouveaux retards d'émission complémentaires $E^{p+1}$ sont déterminés à partir des nouveaux signaux de mesure $S^p$, comporte les étapes suivantes : déterminer des temps de vol aller retour $t^p$ à partir des nouveaux signaux de mesure $S^p$ ; déterminer les nouveaux retards d'émission complémentaires $E^{p+1}$ à partir des temps de vol $t^p$.

De façon optionnelle également, l'étape, lors de laquelle des temps de vol aller retour $t^p$ sont déterminés à partir des nouveaux signaux de mesure $S^p$, comporte, pour chaque transducteur, l'étape suivante : déterminer un instant de référence sur le nouveau signal de mesure $S_n^p$ fourni par le transducteur considéré, notamment l'instant où l'enveloppe de l'amplitude du nouveau signal de mesure $S_n^p$ prend une valeur maximale, n désignant l'indice du transducteur considéré.

De façon optionnelle également, l'étape, lors de laquelle des temps de vol aller retour $t^p$ sont déterminés à partir des nouveaux signaux de mesure $S^p$, comporte les étapes suivantes : déterminer des décalages de réception $R^p$ à partir des retards d'émission $L^p$ ; décaler dans le temps les nouveaux signaux de mesure $S^p$ en fonction des décalages de réception $R^p$.

De façon optionnelle également, l'étape, lors de laquelle les nouveaux retards d'émission complémentaires $E^{p+1}$ sont déterminés à partir des temps de vol $t^p$ comporte, pour chaque transducteur, l'étape suivante : déterminer le nouveau retard d'émission complémentaire $E_n^{p+1}$ pour le transducteur considéré selon l'équation :

$$E_n^{p+1} = \frac{1}{2}\left[\max\left(t_1^p,...,t_N^p\right) - t_n^p\right],$$

où $t_n^p$ est le temps de vol aller retour déterminé à partir du nouveau signal de mesure fourni par le transducteur considéré, n désignant l'indice du transducteur considéré et N le nombre de transducteurs.

De façon optionnelle également, le procédé comporte en outre l'étape suivante : à la fin de chaque itération $p$ des étapes, évaluer un test d'arrêt qui, s'il est vérifié arrête le procédé, et qui, s'il n'est pas vérifié, provoque l'exécution d'une nouvelle itération $p+1$ des étapes.

De façon optionnelle également, les ondes ultrasonores émises par les transducteurs sont des ondes impulsionnelles présentant une pseudo-période temporelle $T$, et le test d'arrêt comporte la vérification de l'inégalité suivante :

$$\max\left(E_1^p,...,E_N^p\right) \leq \frac{T}{4}.$$

De façon optionnelle également, le test d'arrêt comporte la vérification que le nombre d'itérations a atteint un nombre prédéterminé, par exemple trois ou quatre itérations.

L'invention a également pour objet un programme d'ordinateur téléchargeable depuis un réseau de communication et/ou enregistré sur un support lisible par ordinateur et/ou exécutable par un processeur, comprenant des instructions pour l'exécution des étapes d'un procédé de sondage selon l'invention, lorsque ledit programme est exécuté sur un ordinateur.

L'invention a également pour objet un dispositif de sondage à ultrasons comportant :

- une sonde comprenant un boîtier et des transducteurs à ultrasons attachés au boîtier,
- des moyens de commande conçus pour mettre en oeuvre un procédé de commande des transducteurs selon l'invention.

L'invention sera mieux comprise à l'aide de la description qui va suivre, donnée uniquement à titre d'exemple et faite en se référant aux dessins annexés dans lesquels :

- la figure 1 représente schématiquement la structure générale d'un dispositif de sondage selon un mode de réalisation de l'invention,
- la figure 2 illustre les étapes successives d'un procédé de sondage comprenant une boucle d'étapes, et mis en oeuvre par le dispositif de sondage de la figure 1,
- la figure 3 représente un exemple d'utilisation de la sonde de la figure 1 pour sonder un objet coudé,
- la figure 4 représente des signaux de mesure fournis par des transducteurs du dispositif de la figure 1,
- les figures 5 et 6 sont des B-scan obtenus à partir de signaux de mesure, pour respectivement une première et une deuxième itération de la boucle d'étapes,
- la figure 7 illustre un phénomène d'interférences, et
- les figures 8 et 9 sont des B-scan obtenus à partir de signaux de mesure, pour respectivement une troisième et une quatrième itération de la boucle d'étapes.

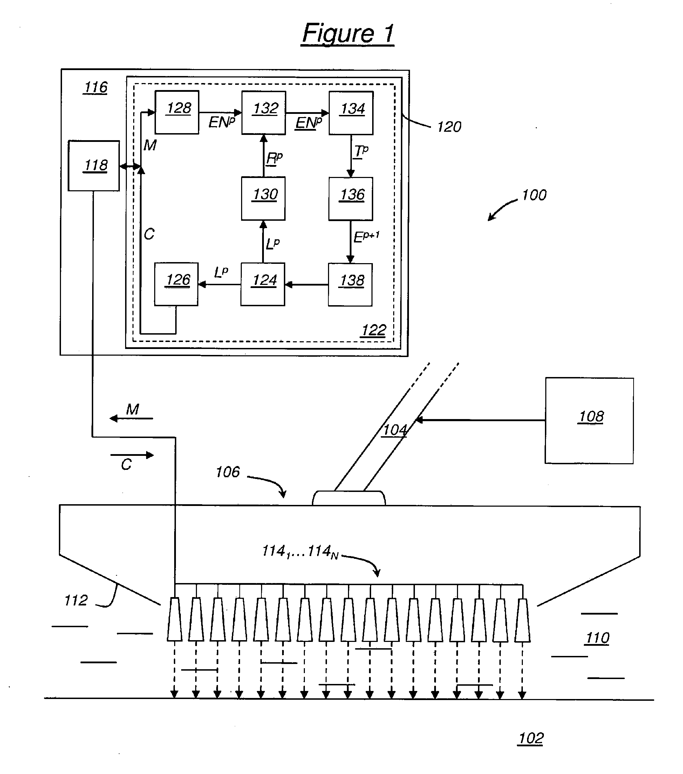

En référence à la figure 1, un dispositif de sondage 100 d'un objet 102 selon un mode de réalisation de l'invention comporte un bras articulé 104, une sonde à ultrasons 106 fixée au bras articulé 104 et des moyens 108 de commande de bras articulé conçus pour commander le bras articulé 104 afin que ce dernier déplace la sonde 106 par rapport à l'objet 102.

L'objet 102 est par exemple une pièce mécanique que l'on souhaite examiner par contrôle non destructif ou bien, dans un contexte médical, une partie du corps humain que l'on souhaite contrôler de manière non invasive.

Dans le mode de réalisation de la figure 1, l'objet 102 est immergé dans un liquide, tel que de l'eau 110, et la sonde 106 est maintenue à distance de l'objet 102 afin que l'eau 110 les sépare.

La sonde 106 comporte tout d'abord un boîtier 112, c'est-à-dire un élément de structure indéformable qui sert de référentiel attaché à la sonde 106.

La sonde 106 comporte en outre N transducteurs $114_1...114_N$ disposés dans le boîtier 112 et attachés à ce dernier. Les transducteurs $114_1...114_N$ sont conçus pour émettre des ondes ultrasonores en direction de l'objet 102 en réponse à des signaux de commande C, selon des directions principales parallèles les unes aux autres, indiquées par des flèches en pointillés sur la figure 1.

Les transducteurs $114_1...114_N$ sont en outre conçus pour détecter des échos des ondes ultrasonores se réfléchissant sur et dans l'objet 102 et pour fournir des signaux de mesure M correspondant à ces échos.

Le dispositif de sondage 100 comporte en outre un circuit électronique 116 de commande des transducteurs $114_1...114_N$ de la sonde 106. Le circuit électronique 116 est connecté à la sonde 106 afin de lui transmettre les signaux de commande C et afin de recevoir les signaux de mesure M. Le circuit électronique 116 est par exemple celui d'un ordinateur. Le circuit électronique 116 présente une unité centrale de traitement 118, telle qu'un microprocesseur conçu pour émettre vers la sonde 106 les signaux de commande C et pour recevoir de la sonde 106 les signaux de mesure M, et une mémoire 120 dans laquelle est enregistré un programme d'ordinateur 122.

Le programme d'ordinateur 122 comporte une boucle d'instructions 124 à 138 pouvant être exécutée plusieurs fois. Dans la suite de la description, un rang d'itération p sera utilisé pour distinguer les différentes itérations de la boucle d'instructions 124 à 138. L'exécution initiale de la boucle correspond à p égal à zéro (première itération), tandis que chaque répétition de la boucle correspond à la valeur de p : p est égal à un pour la première répétition (c'est-à-dire la deuxième itération), à deux pour la deuxième répétition (c'est-à-dire la troisième itération), etc.

Le programme d'ordinateur 122 comporte tout d'abord des instructions 124 conçues pour déterminer des retards d'émission $L^p = \left\{ L_1^p, ..., L_N^p \right\}$, où $L_n^p$ est le retard d'émission à appliquer au transducteur $114_n$, à partir de retards initiaux $E^0$ et, le cas échéant, de retards d'émission complémentaires $E^1...E^p$ qui auront été déterminés par les instructions 136 décrites plus loin. Dans le mode de réalisation décrit, les retards d'émission $L^p$ sont déterminés en additionnant les retards initiaux $E^0$ et les retards d'émission complémentaires $E^1...E^p$ : $L^p = E^0 + E^1 +... + E^p$. A la première exécution des instructions 124, c'est-à-dire lorsque p est égal à zéro, les retards d'émission $L^0$ sont égaux aux retards initiaux $E^0$ : $L^0 = E^0$. Les retards initiaux $E^0$ sont prédéfinis dans le programme d'ordinateur 122. Il s'agit par exemple de retards nuls (aucun retard entre les transducteurs $114_1...114_N$), en particulier dans le cas où aucune information, même approximative, n'est connue sur la géométrie de l'objet 102. En variante, les retards initiaux $E^0$ peuvent être non nuls, et engendrent par exemple un front d'onde partiellement adapté à la géométrie de l'objet 102 en première approximation. Cette variante est par exemple utilisée dans le cas où la géométrie de l'objet 102 est déjà au moins partiellement connue.

Le programme d'ordinateur 122 comporte en outre des instructions 126 conçues pour commander les transducteurs $114_1...114_N$ afin qu'ils émettent vers l'objet 102 des ondes ultrasonores ayant des retards d'émission $L^p$ les unes par rapport aux autres. A cet effet, les instructions 126 sont conçues pour transmettre des signaux de commande $C^p = \left\{ C_1^p, ..., C_N^p \right\}$ aux transducteurs $114_1...114_N$, où $C_n^p$ est la commande transmise au transducteur $114_n$ devant présenter un retard d'émission $L_n^p$. Ces signaux de commande $C^p$ sont conçus afin que les transducteurs $114_1...114_N$ émettent chacun une onde ultrasonore impulsionnelle de pseudo-période temporelle T, les impulsions étant ainsi décalées dans le temps les unes par rapport aux autres des retards d'émission $L^p$. Les retards d'émission $L^p$ ont pour but de compenser les différences entre les distances séparant chaque transducteur de l'objet 102 pour le trajet aller, afin que les ondes ultrasonores émises par les transducteurs atteignent au même instant l'objet 102.

Le programme d'ordinateur 122 comporte en outre des instructions 128 conçues pour recevoir, depuis les transducteurs, des signaux de mesure $S^p = \left\{ S_1^p, ..., S_N^p \right\}$, où $S_n^p$ est le signal de mesure fourni par le transducteur $114_n$, mesurant en particulier les échos dus aux réflexions des ondes ultrasonores sur l'objet 102. Les instructions 128 sont en outre conçues pour enregistrer les signaux de mesure $S^p$. Dans le mode de réalisation décrit, les instructions 128 sont conçues pour enregistrer le signal de mesure de chaque transducteur $114_n$ sur une porte temporelle de durée prédéterminée et débutant, par exemple, lorsque le signal de commande $C_n^p$ de ce transducteur $114_n$ est émis. Les enregistrements des signaux de mesure $S^p$ sont notés $EN^p = \left\{ EN_1^p, ..., EN_N^p \right\}$, où $EN_n^p$ est l'enregistrement du signal $S_n^p$ du transducteur $114_n$.

Le programme d'ordinateur 122 comporte en outre des instructions 130 conçues pour déterminer des décalages de réception $R^p = \left\{ R_1^p, ..., R_N^p \right\}$ des enregistrements $EN^p$, à partir des retards d'émission $L^p$, $R_n^p$ étant le décalage de réception de l'enregistrement $EN_n^p$. Dans le mode de réalisation décrit, les décalages de réception $R^p$ sont déterminés au moyen de la formule suivante : $R_n^p = \max\left( L_1^p, ..., L_N^p \right) - L_n^p$. Les décalages de réception $R^p$ ont pour but de compenser les différences entre les distances séparant chaque transducteur de l'objet pour le trajet retour, afin que les échos des ondes ultrasonores, qui sont supposées se réfléchir au même instant sur la surface de l'objet 102 grâce aux retards d'émission $L^p$, atteignent au même instant les transducteurs $114_1...114_N$.

Le programme d'ordinateur 122 comporte en outre des instructions 132 conçues pour décaler les enregistrements $EN^p$ des signaux de mesure $S^p$ en fonction des décalages de réception $R^p$. Les enregistrements ainsi décalés sont notés $\underline{EN}^p = \left\{ \underline{EN}_1^p, ..., \underline{EN}_N^p \right\}$, où $\underline{EN}_n^p$ est l'enregistrement décalé du signal $S_n^p$ du transducteur $114_n$.

Le programme d'ordinateur 122 comporte en outre des instructions 134 conçues pour déterminer des temps de vol aller retour $t^p = \left\{ t_1^p, ..., t_N^p \right\}$, où $t_n^p$ est le temps de vol aller retour déterminé à partir de l'enregistrement décalé $\underline{EN}_n^p$ correspondant au transducteur $114_n$. Ainsi, les temps de vol aller retour $t^p$ tiennent compte des retards d'émission $L^p$ et des décalages de réception $R^p$. Dans le mode de réalisation décrit, le temps de vol aller retour $t_n^p$ pour chaque transducteur $114_n$ est déterminé en détectant, par exemple, le maximum de l'enveloppe du signal correspondant $S_n^p$, enregistré dans l'enregistrement décalé $\underline{EN}_n^p$.

Le programme d'ordinateur 122 comporte en outre des instructions 136 conçues pour déterminer de nouveaux retards d'émission complémentaires $E^{p+1}$ à partir des temps de vol aller retour $t^p$. Dans le mode de réalisation décrit, les retards d'émission complémentaires $E^{p+1}$ sont déterminés au moyen de la formule suivante :

$$ E_n^{p+1} = \frac{1}{2}\left[ \max\left( t_1^p, ..., t_N^p \right) - t_n^p \right]. $$

Le programme d'ordinateur 122 comporte en outre des instructions 138 conçues pour évaluer un test d'arrêt, afin de déterminer l'arrêt si le test d'arrêt est vérifié ou la poursuite de l'exécution du programme d'ordinateur 122 dans le cas contraire. Dans ce dernier cas, les instructions 138 sont conçues pour revenir aux instructions 124 afin de provoquer une nouvelle itération de la boucle d'instructions 124 à 138, avec les nouveaux retards d'émission complémentaires $E^{p+1}$, de sorte que l'ensemble des retards d'émission complémentaires comprend les $p+1$ retards d'émission complémentaires $E^1, ..., E^{p+1}$. Dans la présente description, c'est à ce moment que l'indice $p$ est incrémenté d'une unité, de sorte que l'ensemble des retards d'émission complémentaires est à ce moment noté $E^1, ..., E^p$, en accord avec la description des instructions 124. Dans le mode de réalisation décrit, le test d'arrêt consiste à vérifier que l'inégalité suivante est vérifiée : $\max\left( E_1^p, ..., E_N^p \right) \leq \frac{T}{4}$, où $T$ est la pseudo-période temporelle des ondes ultrasonores émises par les transducteurs et où $E^p$ sont les derniers retards d'émission complémentaires déterminés à l'étape 134 (où ils étaient notés $E^{p+1}$). En variante, les instructions 138 peuvent être conçues pour arrêter l'exécution du programme 122 au bout d'un nombre prédéterminé d'exécutions de la boucle, par exemple quatre ou cinq, soit $p$ égal à trois ou quatre.

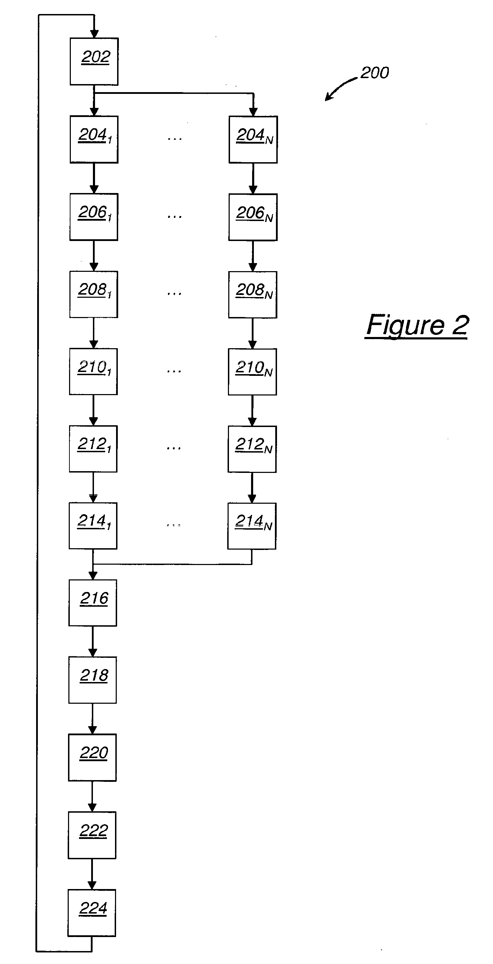

En référence à la figure 2, un procédé de sondage 200 mis en oeuvre par le dispositif 100 de la figure 1 va à présent être décrit.

Au cours d'une étape 202, l'unité de traitement 118 exécutant les instructions 124 détermine les retards d'émission $L^p = \left\{ L_1^p, ..., L_N^p \right\}$ à partir des retards initiaux $E^0$ et, le cas échéant, des retards d'émission complémentaires $E^1...E^p$ qui auront été déterminés à l'étape 222 décrite plus loin.

Au cours d'étapes $204_1$ à $204_N$, l'unité de traitement 118 exécutant les instructions 126 commande chaque transducteur $114_n$ afin qu'il émette des ondes ultrasonores vers l'objet 102, les ondes ultrasonores émises par les transducteurs $114_1...114_N$ ayant les retards d'émission $L^p$ les unes par rapport aux autres. A cet effet, l'unité de traitement 118 exécutant les instructions 126 transmet chaque signal de commande $C_n^p$ au transducteur $114_n$ correspondant, les signaux de commande $C^p$ ayant les retards d'émission $L^p$ les uns par rapport aux autres.

Au cours d'étapes $206_1$ à $206_N$, l'unité de traitement 118 exécutant les instructions 128 débute, suite à la transmission de chaque signal de commande $C_n^p$ vers le transducteur $114_n$ correspondant, l'enregistrement du signal de mesure $S_n^p$ fourni par ce transducteur $114_n$.

Au cours d'étapes $208_1$ à $208_N$, chaque transducteur $114_1...114_N$ émet, suite à la réception de son signal de commande, une onde ultrasonore impulsionnelle de pseudo-période temporelle $T$. Ainsi, les impulsions sont décalées dans le temps les unes par rapport aux autres des retards d'émission $L^p$.

Au cours d'étapes $210_1$ à $210_N$, chaque transducteur $114_n$ reçoit les échos des ondes ultrasonores réfléchies sur et dans l'objet 102.

Au cours d'étapes $212_1$ à $212_N$, chaque transducteur $114_n$ fournit son signal de mesure $S_n^p$, mesurant en particulier les échos des ondes ultrasonores sur la surface de l'objet 102. L'unité de traitement 118 exécutant les instructions 128 reçoit ce signal $S_n^p$ et l'enregistre dans l'enregistrement $EN_n^p$.

Au cours d'étapes $214_1$ à $214_N$, l'unité de traitement 118 exécutant les instructions 128 stoppe l'enregistrement $EN_n^p$ du signal $S_n^p$ du transducteur $114_n$.

Au cours d'une étape 216, l'unité de traitement 118 exécutant les instructions 130 détermine les décalages de réception $R^p$ à partir des retards d'émission $L^p$.

Au cours d'une étape 218 l'unité de traitement 118 exécutant les instructions 132 décale les enregistrements $EN^p$ des signaux de mesure $S^p$ en fonction des décalages de réception $R^p$, afin d'obtenir les enregistrements décalés $\underline{EN}^p$.

Au cours d'une étape 220, l'unité de traitement 118 exécutant les instructions 134 détermine les temps de vol aller retour $t^p = \left\{ t_1^p, ..., t_N^p \right\}$ entre les transducteurs $114_1...114_N$ et l'objet 102 tenant compte des retards d'émission $L^p$ et des décalages de réception $R^p$, à partir des enregistrements décalés $\underline{EN}^p$.

Au cours d'une étape 222, l'unité de traitement 118 exécutant les instructions 136 détermine de nouveaux retards d'émission complémentaires $E^{p+1}$ à partir des temps de vol aller retour $t^p$.

Ainsi, on remarquera que les étapes 216 à 222 permettent de déterminer des retards d'émission complémentaires $E^{p+1}$ à partir des signaux de mesure $S^p$.

Au cours d'une étape 224, l'unité de traitement 118 exécutant les instructions 138 détermine l'arrêt ou la poursuite de l'exécution du programme d'ordinateur 122, et, dans ce dernier cas, incrémente $p$ d'une unité avant de retourner à l'étape 202.

Le procédé de la figure 2 est mis en oeuvre à chaque position du déplacement de la sonde 106 par rapport à l'objet 102. Dans le cas où l'objet présente de faibles variations de géométrie le long de ce déplacement, les retards d'émission initiaux $E^0$ à une position donnée sont avantageusement pris égaux aux derniers retards d'émission $L^p$ déterminés à une position précédente, notamment la position directement précédente. Ceci permet d'augmenter les vitesses d'inspection de pièces de surfaces très étendues par diminution du nombre de tirs à chaque position.

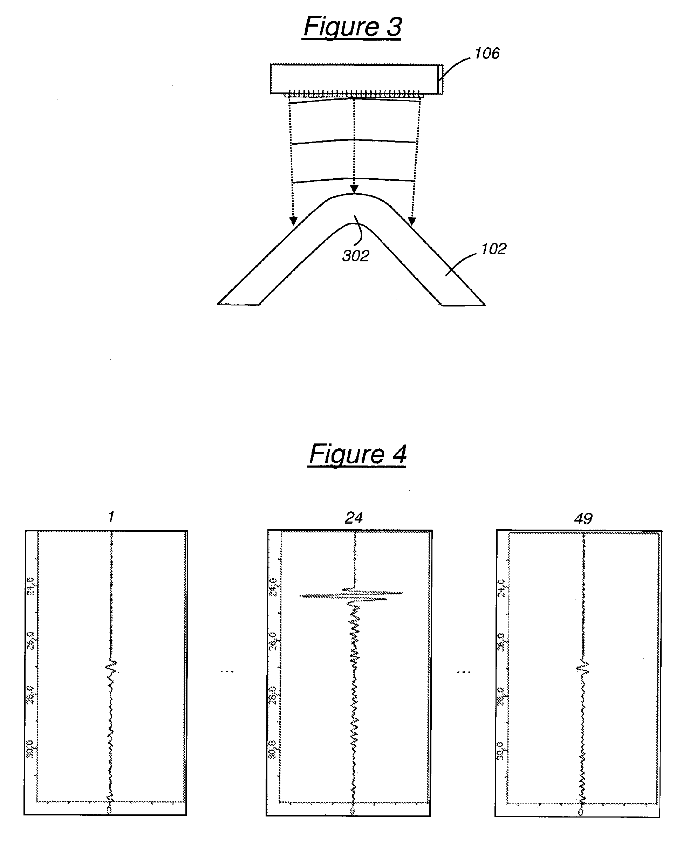

En référence aux figures 3 à 9, un exemple de mise en oeuvre du procédé de sondage de la figure 2 va être détaillé.

En référence à la figure 3, dans l'exemple décrit, l'objet 102 est une pièce présentant un coude 302 d'angle élevé, et donc de rayon de courbure faible, que la sonde 106 du dispositif de sondage 100 est destinée à sonder. La sonde 106 comporte par exemple N = 49 transducteurs.

Afin de sonder le coude 302, le procédé de la figure 2 est mis en oeuvre.

A une première exécution de la boucle d'étapes, c'est-à-dire lorsque $p$ est égal à zéro (première itération), des ondes ultrasonores sont émises aux étapes $208_1$ à $208_N$ par les transducteurs avec des retards d'émission $L^0$ égaux aux retards initiaux $E^0$ : $L^0 = E^0$, nuls dans l'exemple décrit.

Des enregistrements décalés $\underline{EN}^p$ ensuite obtenus à l'étape 218, dont ceux du premier, du $24^{\text{ième}}$ et du $49^{\text{ième}}$ transducteurs qui sont représentés sur la figure 4.

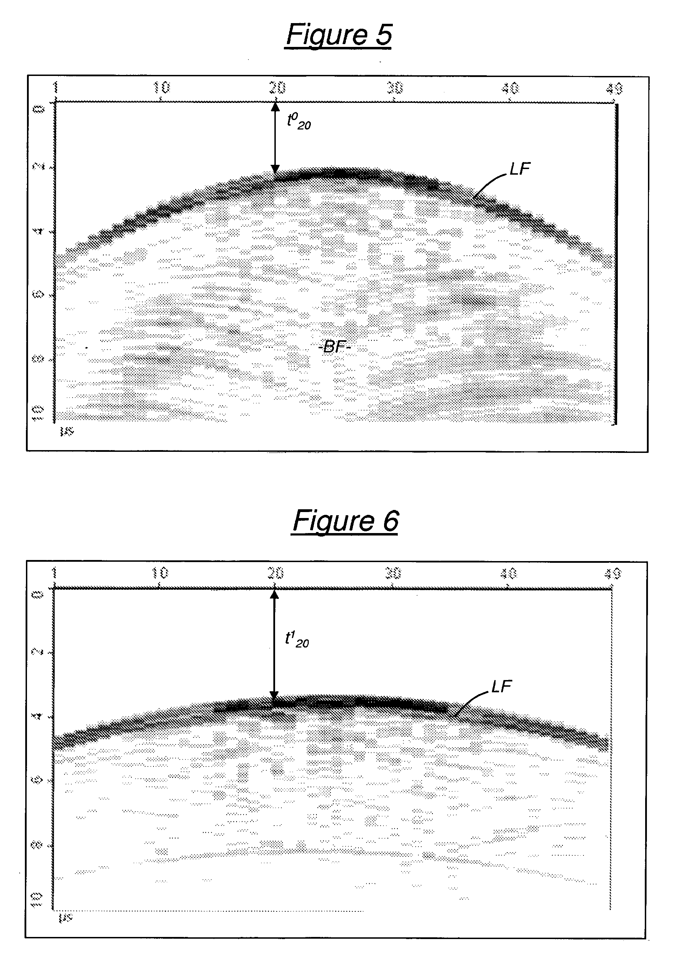

En référence à la figure 5, l'amplitude de l'enveloppe des signaux décalés $\underline{EN}^p$ est déterminée à l'étape 220. Ils sont représentés sur la figure 5, dans laquelle l'axe vertical correspond au temps, l'axe horizontal aux transducteurs et l'amplitude de l'enveloppe au niveau de gris des points. Cette représentation est connue, comme indiqué précédemment, sous le nom de « B-scan ». Selon une représentation connue de B-scan, la distance aller retour $t_n^0$ pour chaque transducteur $114_n$ est déterminée comme étant la distance séparant l'origine des temps du maximum de l'amplitude d'enveloppe, c'est-à-dire du point le plus foncé sur la ligne verticale correspondant au transducteur $114_n$. Par ailleurs, on remarque l'apparition d'une ligne foncée LF, regroupant tous les points les plus foncés de chaque ligne verticale et correspondant à l'écho de surface du coude 302, suivie d'un important bruit de structure BF ne permettant en aucun cas de révéler la présence d'un éventuel défaut dans l'objet 102.

En variante, on notera que la représentation B-scan peut être modifiée en appliquant un traitement de moyenne glissante aux signaux de mesure enregistrés dans les enregistrements décalés *EN^p*.

Les retards d'émission complémentaires $E^1$ sont alors déterminés à l'étape 222, et la poursuite de l'exécution du programme est décidée à l'étape 224 de sorte qu'une première répétition (deuxième itération) des étapes est réalisée (*p* est incrémenté à 1).

La figure 6 représente le B-scan obtenu à l'étape 220 de cette première répétition (ou deuxième itération), à partir des retards d'émission $L^1 = E^0 + E^1$. Les retards d'émission complémentaires ayant été calculé à partir des temps de trajet aller retour, on s'attendrait à obtenir une ligne foncée horizontale qui indiquerait que les ondes ultrasonores de tous les transducteurs atteignent au même instant le coude 302. Cependant, on remarque que ce n'est pas le cas et que la ligne foncée LF, correspondant à la surface du coude 302, est toujours un peu bombée.

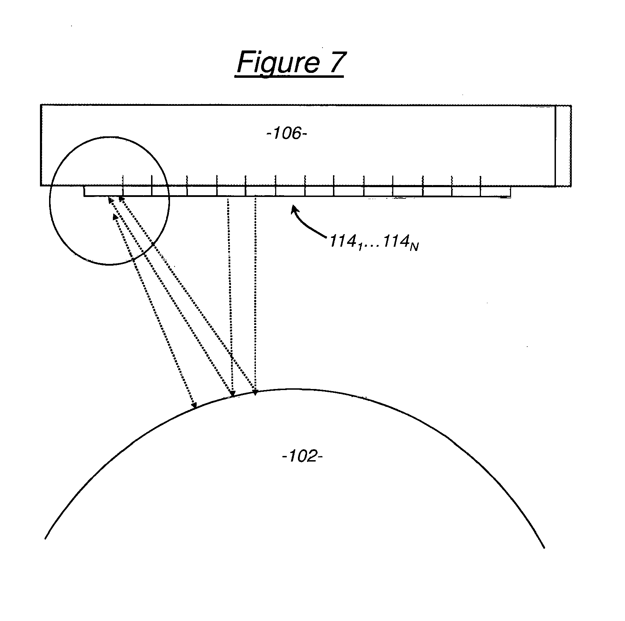

En référence à la figure 7, les inventeurs ont déterminé que, pour des pièces très complexes, la première itération et sa répétition jusqu'à l'étape 220 ne suffisent pas pour corriger les écarts de géométrie et les phénomènes de superposition d'ondes sur un même signal de mesure qui en découlent. En effet, chaque transducteur détecte un écho qui est le produit de l'interférence entre l'écho résultant de sa propre émission d'ondes ultrasonores et les échos résultant des ondes ultrasonores émises par les transducteurs voisins. Les inventeurs ont néanmoins déterminé qu'il était possible d'adapter l'appareil de sondage 100 à des géométries très complexes, telles que le coude 302, en itérant plusieurs fois complètement les étapes du procédé 200 de la figure 2.

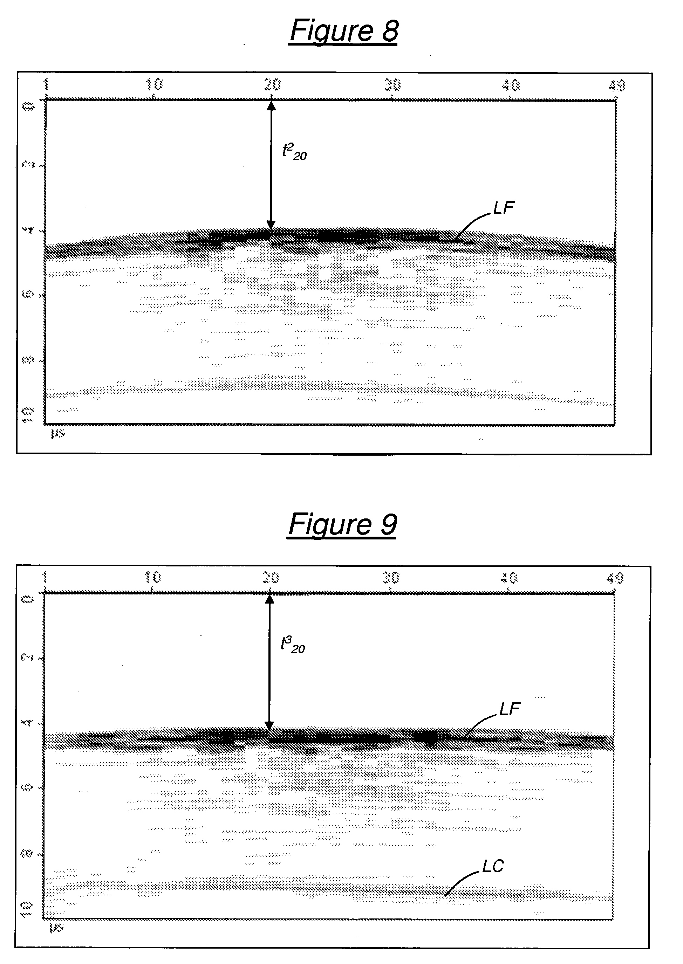

Ainsi, la figure 8 représente le B-scan obtenu à l'étape 220 de la deuxième répétition (ou troisième itération), à partir des retards d'émission $L^2 = E^0 + E^1 + E^2$, tandis que la figure 9 représente le B-scan obtenu à l'étape 220 de la troisième répétition (ou quatrième itération), à partir des retards d'émission $L^3 = E^0 + E^1 + E^2 + E^3$. On remarque que la ligne foncée LF est pratiquement horizontale sur cette dernière figure, indiquant que l'appareil de sondage 100 est adapté à la géométrie de l'objet 102, c'est-à-dire que le front d'ondes ultrasonores formé par l'ensemble des ondes engendrées par tous les transducteurs $114_1...1114_N$ a la même courbure que la surface du coude 302..

En outre, le bruit interne a disparu, laissant apparaître la structure réelle de l'objet 102, en particulier une ligne claire LC indiquant le fond du coude 302. Ainsi, tout défaut dans l'objet 102 devient apparent grâce à une répétition multiple de la boucle d'étapes précédemment décrite. En particulier, les défauts de type délaminage, qui sont généralement situés au voisinage du fond LC, sont mieux détectés.

On notera par ailleurs que l'invention n'est pas limitée au mode de réalisation décrit précédemment. Il apparaîtra en effet à l'homme de l'art que diverses modifications peuvent être apportées au mode de réalisation décrit ci-dessus, à la lumière de l'enseignement qui vient de lui être divulgué.

En particulier, les instructions de programme d'ordinateur pourraient être remplacées par des circuits électroniques dédiés aux fonctions réalisées lors de l'exécution de ces instructions.

En outre, le procédé selon l'invention peut être mis en oeuvre avec un déplacement mécanique de la sonde ou bien en procédant à un déplacement électronique d'une sous ouverture le long de l'ouverture totale du capteur où sont situés les transducteurs.

Dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1.  Procédé de commande de transducteurs à ultrasons ($114_1...114_N$) d'une sonde à ultrasons (106) dans le but de sonder un objet (102), comportant les étapes suivantes :

    - commander ($204_1$ à $204_N$) les transducteurs ($114_1...114_N$) afin qu'ils émettent vers l'objet (102) des ondes ultrasonores ayant des retards d'émission initiaux $E^0$ les unes par rapport aux autres,
    - recevoir ($212_1$ à $212_N$) depuis les transducteurs ($114_1...114_N$) des signaux de mesure $S^0$, mesurant en particulier des échos dus à des réflexions des ondes ultrasonores sur l'objet (102),
    - déterminer (216, 218, 220, 222) des retards d'émission complémentaires $E^1$ à partir des signaux de mesure $S^0$,
    - commander ($204_1$ à $204_N$) les transducteurs ($114_1...114_N$) afin qu'ils émettent vers l'objet (102) des ondes ultrasonores ayant des retards

d'émission $L^1$ les unes par rapport aux autres, les retards d'émission $L^1$ ayant été déterminés (202) à partir des retards d'émission initiaux $E^0$ et des retards d'émission complémentaires $E^1$,

**caractérisé en ce qu'**il comporte en outre les étapes suivantes, itérées au moins une fois, le numéro d'itération étant noté $p$ :

- recevoir ($212_1$ à $212_N$) depuis les transducteurs ($114_1...114_N$) des nouveaux signaux de mesure $S^p$, mesurant des échos dus à des réflexions des ondes ultrasonores sur l'objet (102), les ondes ultrasonores ayant des retard d'émission $L^p$ les unes par rapport aux autres, les retards d'émission $L^p$ ayant été déterminés (202) à partir des retards d'émission initiaux $E^0$ et de tous les retards d'émission complémentaires $E^1...E^p$ déterminés auparavant,
- déterminer (216, 218, 220, 222) de nouveaux retards d'émission complémentaires $E^{p+1}$ à partir des nouveaux signaux de mesure $S^p$,
- commander ($204_1$ à $204_N$) les transducteurs ($114_1...114_N$) afin qu'ils émettent des ondes ultrasonores vers l'objet (102), les ondes ultrasonores ayant des retard d'émission $L^{p+1}$ les unes par rapport aux autres, les retards d'émission $L^{p+1}$ ayant été déterminés (202) à partir des retards d'émission initiaux $E^0$ et de tous les retards d'émission complémentaires $E^1...E^{p+1}$ déterminés auparavant.

2. Procédé selon la revendication 1, dans lequel l'étape (216, 218, 220, 222), lors de laquelle de nouveaux retards d'émission complémentaires $E^{p+1}$ sont déterminés à partir des nouveaux signaux de mesure $S^p$, comporte les étapes suivantes :

- déterminer (216, 218, 220) des temps de vol aller retour $t^p$ à partir des nouveaux signaux de mesure $S^p$,
- déterminer (222) les nouveaux retards d'émission complémentaires $E^{p+1}$ à partir des temps de vol $t^p$.

3. Procédé de commande selon la revendication 2, dans lequel l'étape (216, 218, 220), lors de laquelle des temps de vol aller retour $t^p$ sont déterminés à partir des nouveaux signaux de mesure $S^p$, comporte, pour chaque transducteur ($114_1...114_N$), l'étape suivante :

- déterminer un instant de référence sur le nouveau signal de mesure $S_n^p$ fourni par le transducteur considéré ($114_n$), notamment l'instant où l'enveloppe de l'amplitude du nouveau signal de mesure prend une valeur maximale, n désignant l'indice du transducteur considéré.

4. Procédé de commande selon la revendication 2 ou 3, dans lequel l'étape (216, 218, 220), lors de laquelle des temps de vol aller retour $t^p$ sont déterminés à partir des nouveaux signaux de mesure $S^p$, comporte les étapes suivantes :

- déterminer (216) des décalages de réception $R^p$ à partir des retards d'émission $L^p$,
- décaler (218) dans le temps les nouveaux signaux de mesure $S^p$ en fonction des décalages de réception $R^p$.

5. Procédé selon l'une quelconque des revendications 2 à 4, dans lequel l'étape (222), lors de laquelle les nouveaux retards d'émission complémentaires $E^{p+1}$ sont déterminés à partir des temps de vol $t^p$ comporte, pour chaque transducteur ($114_1...114_N$), l'étape suivante :

- déterminer le nouveau retard d'émission complémentaire $E_n^{p+1}$ pour le transducteur considéré ($114_n$) selon l'équation :

$$E_n^{p+1} = \frac{1}{2}\left[\max\left(t_1^p,...,t_N^p\right) - t_n^p\right],$$

où $t_n^p$ est le temps de vol aller retour déterminé à partir du nouveau signal de mesure $S_n^p$ fourni par le transducteur considéré ($114_n$), n désignant l'indice du transducteur considéré et N le nombre de transducteurs.

6. Procédé selon l'une quelconque des revendications 1 à 5, comportant en outre l'étape suivante :

- à la fin de chaque itération $p$ des étapes, évaluer un test d'arrêt qui, s'il est vérifié arrête le procédé, et qui, s'il n'est pas vérifié, provoque l'exécution d'une nouvelle itération $p + 1$ des étapes.

7. Procédé selon la revendication 6, dans lequel les ondes ultrasonores émises par les transducteurs sont des ondes impulsionnelles présentant une pseudo-période temporelle $T$, et dans lequel le test d'arrêt comporte la vérification de l'inégalité suivante : $\max\left(E_1^p,...,E_N^p\right) \leq \frac{T}{4}$.

8. Procédé selon la revendication 6, dans lequel le test d'arrêt comporte la vérification que le nombre d'itérations a atteint un nombre prédéterminé, par exemple trois ou quatre itérations.

9. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé de sondage selon l'une quelconque des revendications 1 à 8, lorsque ledit programme est exécuté sur un ordinateur.

10. Dispositif de sondage à ultrasons d'un objet (102), comportant une sonde (106) comprenant un boîtier (112), des transducteurs à ultrasons ($114_1...114_N$) attachés au boîtier (112) et des moyens de commande (116) permettant d'éxécuter :

- des instructions (126) de commande des transducteurs ($114_1...114_N$) afin qu'ils émettent vers l'objet (102) des ondes ultrasonores ayant des retards d'émission initiaux $E^0$ les unes par rapport aux autres,
- des instructions (128) de réception depuis les transducteurs ($114_1...114_N$) de signaux de mesure $S^0$, mesurant en particulier des échos dus à des réflexions des ondes ultrasonores sur l'objet (102),
- des instructions (130, 132, 134, 136) de détermination de retards d'émission complémentaires $E^1$ à partir des signaux de mesure $S^0$,
- des instructions (126) de commande des transducteurs ($114_1...114_N$) afin qu'ils émettent vers l'objet (102) des ondes ultrasonores ayant des retards d'émission $L^1$ les unes par rapport aux autres, les retards d'émission $L^1$ ayant été déterminés à partir des retards d'émission initiaux $E^0$ et des retards d'émission complémentaires $E^1$,
- des instructions (128), à itérer au moins une fois, le numéro d'itération étant noté $p$, de réception depuis les transducteurs ($114_1...114_N$) de nouveaux signaux de mesure $S^p$, mesurant des échos dus à des réflexions des ondes ultrasonores sur l'objet (102), les ondes ultrasonores ayant des retards d'émission $L^p$ les unes par rapport aux autres, les retards d'émission $L^p$ ayant été déterminés à partir des retards d'émission initiaux $E^0$ et de tous les retards d'émission complémentaires $E^1...E^p$ déterminés auparavant,
- des instructions (130, 132, 134, 136), à itérer au moins une fois, de détermination de nouveaux retards d'émission complémentaires $E^{p+1}$ à partir des nouveaux signaux de mesure $S^p$,
- des instructions (126), à itérer au moins une fois, de commande des transducteurs ($114_1...114_N$) afin qu'ils émettent des ondes ultrasonores vers l'objet (102), les ondes ultrasonores ayant des retard d'émission $L^{p+1}$ les unes par rapport aux autres, les retards d'émission $L^{p+1}$ ayant été déterminés à partir des retards d'émission initiaux $E^0$ et de tous les retards d'émission complémentaires $E^1...E^{p+1}$ déterminés auparavant.

**Patentansprüche**

1. Verfahren zur Steuerung von Ultraschallwandlern ($114_1...114_N$) einer Ultraschallsonde (106) mit dem Ziel, ein Objekt (102) zu untersuchen, wobei das Verfahren folgende Schritte umfasst:

- Steuern ($204_1$ bis $204_N$) der Wandler ($114_1...114_N$), damit sie in Richtung des Objekts (102) Ultraschallwellen senden, die zueinander anfängliche Sendeverzögerungen $E^0$ aufweisen,
- Empfangen ($212_1$ bis $212_N$) von Messsignalen $S^0$ von den Wandlern ($114_1...114_N$), die insbesondere Echos der Reflexionen der Ultraschallwellen an dem Objekt (102) messen,
- Bestimmen (216, 218, 220, 222) komplementärer Sendeverzögerungen $E^1$ auf Basis der Messsignale $S^0$,
- Steuern ($204_1$ bis $204_N$) der Wandler ($114_1...114_N$), damit sie in Richtung des Objekts (102) Ultraschallwellen senden, die zueinander Sendeverzögerungen $L^1$ aufweisen, wobei die Sendeverzögerungen $L^1$ auf Basis der anfänglichen Sendeverzögerungen $E^0$ und der komplementären Sendeverzögerungen $E^1$ bestimmt worden sind,

**dadurch gekennzeichnet, dass** das Verfahren überdies die folgenden Schritte umfasst, die mindestens einmal iteriert werden, wobei die Nummer der Iteration durch $p$ angegeben ist:

- Empfangen ($212_1$ bis $212_N$) von neuen Messsignalen $S^p$ von den Wandlern ($114_1...114_N$), die Echos der Reflexionen der Ultraschallwellen an dem Objekt (102) messen, wobei die Ultraschallwellen zueinander Sendeverzögerungen $L^p$ aufweisen, wobei die Sendeverzögerungen $L^p$ auf Basis der anfänglichen Sendeverzögerungen $E^0$ und aller vorher bestimmten komplementären Sendeverzögerungen $E^1...E^p$ bestimmt worden sind (202),
- Bestimmen (216, 218, 220, 222) neuer komplementärer Sendeverzögerungen $E^{p+1}$ auf Basis der neuen Messsignale $S^p$,
- Steuern ($204_1$ bis $204_N$) der Wandler ($114_1$ bis $114_N$), damit sie in Richtung des Objekts (102) Ultraschallwellen senden, wobei die Ultraschallwellen zueinander Sendeverzögerungen $L^{p+1}$ aufweisen, wobei die Sendeverzögerungen $L^{p+1}$ auf Basis der anfänglichen Sendeverzögerungen $E^0$ und aller vorher bestimmten komplementären Sendeverzögerungen $E^1...E^{p+1}$ bestimmt worden sind (202).

2. Verfahren nach Anspruch 1, wobei der Schritt (216, 218, 220, 222), bei dem neue Sendeverzögerungen $E^{p+1}$ auf Basis der neuen Messsignale $S^p$ bestimmt werden, folgende Schritte umfasst:

   - Bestimmen (216, 218, 220) von Gesamtlaufzeiten $t^p$ auf Basis der neuen Messsignale $S^p$,
   - Bestimmen (222) der neuen komplementären Sendeverzögerungen $E^{p+1}$ auf Basis der Laufzeiten $t^p$.

3. Verfahren zur Steuerung nach Anspruch 2, wobei der Schritt (216, 218, 220), bei dem Gesamtlaufzeiten $t^p$ auf Basis der neuen Messsignale $S^p$ für jeden Wandler ($114_1...114_N$) bestimmt werden, den folgenden Schritt umfasst:

   - Bestimmen eines Referenzpunktes auf dem neuen, von dem betreffenden Wandler ($114_n$) gelieferten Messsignal $S^p_n$, namentlich des Punkts, an dem die Hüllkurve der Amplitude des neuen Messsignals $S^p_n$ einen Maximalwert annimmt, wobei n den Index des betreffenden Wandlers bezeichnet.

4. Verfahren zur Steuerung nach Anspruch 2 oder 3, wobei der Schritt (216, 218, 220), bei dem die Gesamtlaufzeiten $t^p$ auf Basis der neuen Messsignale $S^p$ bestimmt werden, folgende Schritte umfasst:

   - Bestimmen (216) von Empfangsverschiebungen $R^p$ auf Basis der Sendeverzögerungen $L^p$,
   - zeitliches Verschieben (218) der neuen Messsignale $S^p$ in Abhängigkeit der Empfangsverschiebungen $R^p$.

5. Verfahren nach einem der Ansprüche 2 bis 4, wobei der Schritt (222), bei dem die neuen komplementären Sendeverzögerungen $E^{p+1}$ auf Basis der Laufzeiten $t^p$ bestimmt werden, für jeden Wandler ($114_1...114_N$) den folgenden Schritt umfasst:

   - Bestimmen der neuen komplementären Sendeverzögerung $E^{p+1}_n$ für den betreffenden Wandler ($114_n$) nach der Gleichung:

   $$E^{p+1}_n = \frac{1}{2}\left[\max\left(t^p_1, ..., t^p_N\right) - t^p_n\right],\ \text{in der}$$

$t^p_n$ die auf Basis des von dem betreffenden Wandler ($114_n$) gelieferten neuen Messsignals $S^p_n$ bestimmte Gesamtlaufzeit ist, wobei n den Index des betreffenden Wandlers und N die Anzahl der Wandler bezeichnet.

6. Verfahren nach einem der Ansprüche 1 bis 5, überdies umfassend den folgenden Schritt:

   - Durchführen eines Abbruchtests am Ende jeder Iteration $p$ der Schritte, der das Verfahren stoppt, wenn er bestätigt wird, und der, wenn er nicht bestätigt wird, die Ausführung einer neuen Iteration $p + 1$ bewirkt.

7. Verfahren nach Anspruch 6, wobei die Ultraschallwellen, die von den Wandlern gesendet werden, Impulswellen sind, die eine Pseudozeitperiode $T$ aufweisen, und wobei der Abbruchtest die Bestätigung der folgenden Ungleichung umfasst:

   $$max\left(E^p_1, ..., E^p_N\right) \le \frac{T}{4}.$$

8. Verfahren nach Anspruch 6, wobei der Abbruchtest die Bestätigung, dass die Anzahl der Iterationen eine vorbestimmte Anzahl erreicht hat, umfasst, zum Beispiel drei oder vier Iterationen.

9. Aus einem Kommunikationsnetz herunterladbares und/oder auf einem computerlesbaren Datenträger gespeichertes und/oder von einem Prozessor ausführbares Computerprogramm, **dadurch gekennzeichnet, dass** es Anweisungen zur Ausführung der Schritte eines Untersuchungsverfahrens nach einem der Ansprüche 1 bis 8, umfasst, wenn das Programm auf einem Computer ausgeführt wird.

10. Ultraschallsondenvorrichtung für ein Objekt (102), umfassend eine Sonde (106), die ein Gehäuse (112) umfasst, Ultraschallwandler ($114_1...114_N$), die an dem Gehäuse (112) befestigt sind, und Steuerungsmittel (116), die ermöglichen folgendes auszuführen:

   - Anweisungen (126) zum Steuern der Wandler ($114_1...114_N$), damit sie in Richtung des Objekts (102) Ultraschallwellen senden, die zueinander anfängliche Sendeverzögerungen $E^0$ aufweisen,

      - Anweisungen (128) zum Empfangen von Messsignalen $S^0$ von den Wandlern ($114_1...114_N$), die insbesondere Echos der Reflexionen der Ultraschallwellen an dem Objekt (102) messen,
      - Anweisungen (130, 132, 134, 136) zum Bestimmen der komplementären Sendeverzögerungen $E^1$ auf Basis der Messsignale $S^0$,

- Anweisungen (126) zum Steuern der Wandler ($114_1$...$114_N$), damit sie in Richtung des Objekts (102) Ultraschallwellen senden, die zueinander Sendeverzögerungen $L^1$ aufweisen, wobei die Sendeverzögerungen $L^1$ auf Basis der anfänglichen Sendeverzögerungen $E^0$ und der komplementären Sendeverzögerungen $E^1$ bestimmt worden sind,

- Anweisungen (128), die mindestens einmal zu iterieren sind, wobei die Nummer der Iteration durch $p$ angegeben ist, zum Empfangen von neuen Messsignalen $S^p$ von den Wandlern ($114_1$...$114_N$), die Echos der Reflexionen der Ultraschallwellen an dem Objekt (102) messen, wobei die Ultraschallwellen zueinander Sendeverzögerungen $L^p$ aufweisen, wobei die Sendeverzögerungen $L^p$ auf Basis der anfänglichen Sendeverzögerungen $E^0$ und aller vorher bestimmten komplementären Sendeverzögerungen $E^1$...$E^p$ bestimmt worden sind,

- Anweisungen (130, 132, 134, 136), die mindestens einmal zu iterieren sind, zum Bestimmen von neuen komplementären Sendeverzögerungen $E^{p+1}$ auf Basis der neuen Messsignale $S^p$,

- Anweisungen (126), die mindestens einmal zu iterieren sind, zum Steuern der Wandler ($114_1$...$114_N$), damit sie in Richtung des Objekts (102) Ultraschallwellen senden, wobei die Ultraschallwellen zueinander Sendeverzögerungen $L^{p+1}$ aufweisen, wobei die Sendeverzögerungen $L^{p+1}$ auf Basis der anfänglichen Sendeverzögerungen $E^0$ und aller vorher bestimmten komplementären Sendeverzögerungen $E^1$...$E^{p+1}$ bestimmt worden sind.

**Claims**

1. Method for controlling ultrasonic transducers ($114_1$...$114_N$) of an ultrasonic probe (106) for the purpose of inspecting an object (102), comprising the following steps:

- controlling ($204_1$ to $204_N$) the transducers ($114_1$...$114_N$) so that they emit towards the object (102) ultrasound waves having initial emission delays $E^0$ with respect to one another,
- receiving ($212_1$ to $212_N$) from the transducers ($114_1$...$114_N$) measurement signals $S^0$, measuring in particular echoes due to reflections of the ultrasound waves on the object (102),

- determining (216, 218, 220, 222) complementary emission delays $E^1$ from the measurement signals $S^0$, and
- controlling ($204_1$ to $204_N$) the transducers ($114_1$...$114_N$) so that they emit towards the object (102) ultrasound waves having emission delays $L^1$ with respect to one another, the emission delays $L^1$ having been determined (202) from the initial emission delays $E^0$ and the complementary emission delays $E^1$,

**characterised in that** it further comprises the following steps, iterated at least once, with the iteration number being denoted $p$ :

- receiving ($212_1$ to $212_N$) from the transducers ($114_1$...$114_N$) new measurement signals $S^p$, measuring echoes due to reflections of the ultrasound waves on the object (102), the ultrasound waves having emission delays $L^p$ with respect to one another, the emission delays $L^p$ having been determined (202) from the initial emission delays $E^0$ and all the complementary emission delays $E^1$...$E^p$ determined previously,
- determining (216, 218, 220, 222) new complementary emission delays $E^{p+1}$ from the new measurement signals $S^p$,
- controlling ($204_1$ to $204_N$) the transducers ($114_1$...$114_N$) so that they emit ultrasound waves towards the object (102), the ultrasound waves having emission delays $L^{p+1}$ with respect to one another, the emission delays $L^{p+1}$ having been determined (202) from the initial emission delays $E^0$ and all the complementary emission delays $E^1$...$E^{p+1}$ determined previously.

2. Method according to claim 1, wherein the step (216, 218, 220, 222), during which new complementary emission delays $E^{p+1}$ are determined from the new measurement signals $S^p$, comprises the following steps:

- determining (216, 218, 220) round trip times $t^p$ from the new measurement signals $S^p$,
- determining (222) the new complementary emission delays $E^{p+1}$ from the trip times $t^p$.

3. Control method according to claim 2, wherein the step (216, 218, 220), during which round trip times $t^p$ are determined from the new measurement signals $S^p$, comprises, for each transducer ($114_1$...$114_N$), the following step:

- determining a reference instant on the new measurement signal $S_n^{\,p}$ supplied by the transducer in question ($114_n$), in particular the instant where the envelope of the amplitude of the new measurement signal $S_n^p$ takes a maximum value, n designating the index of the transducer in question.

4. Control method according to claim 2 or 3, wherein the step (216, 218, 220), during which round trip times $t^p$ are determined from the new measurement signals $S^p$, comprises the following steps:

- determining (216) reception offsets $R^p$ from the emission delays $L^p$,
- offsetting (218) in time the new measurement signals $S^p$ according to the reception offsets $R^p$.

5. Method according to any one of claims 2 to 4, wherein the step (222), during which the new complementary emission delays $E^{p+1}$ are determined from the trip times $t^p$, comprises, for each transducer ($114_1...114_N$), the following step:

- determining the new complementary emission delay $E_n^{p+1}$ for the transducer in question ($114_n$) according to the equation:

$$E_n^{p+1} = \frac{1}{2}\left[\max\left(t_1^p, ..., t_N^p\right) - t_n^p\right], \text{ where } t_n^p$$

is the round trip time determined from the new measurement signal $S_n^p$ supplied by the transducer in question ($114_n$), n designating the index of the transducer in question and N the number of transducers.

6. Method according to any one of claims 1 to 5, further comprising the following step:

- at the end of each iteration $p$ of the steps, evaluating a stop test which, if it is satisfied, stops the method, and which, if it is not satisfied, causes the execution of a new iteration $p + 1$ of the steps.

7. Method according to claim 6, wherein the ultrasound waves emitted by the transducers are pulse waves having a pseudo time period $T$, and wherein the stop test comprises the verification of the following inequality: $\max\left(E_1^p, ..., E_N^p\right) \leq \dfrac{T}{4}$.

8. Method according to claim 6, wherein the stop test comprises the check that the number of iterations has reached a predetermined number, for example three or four iterations.

9. Computer program downloadable from a communication network and/or recorded on a medium that can be read by a computer and/or that can be executed by a processor, **characterised in that** it comprises instructions for execution of the steps of an inspection method according to any one of claims 1 to 8, when said program is executed on a computer.

10. Ultrasonic device for inspecting an object (102), comprising a probe (106) comprising a housing (112), ultrasonic transducers ($114_1...114_N$) attached to the housing (112) and control means (116) that enable the execution of:

- instructions (126) for controlling the transducers ($114_1...114_N$) so that they emit towards the object (102) ultrasound waves having initial emission delays $E^0$ with respect to one another,
- instructions (128) for receiving from the transducers ($114_1...114_N$) measurement signals $S^0$, measuring in particular echoes due to reflections of the ultrasound waves on the object (102),
- instructions (130, 132, 134, 136) for determining complementary emission delays $E^1$ from the measurement signals $S^0$,
- instructions (126) for controlling the transducers ($114_1...114_N$) so that they emit towards the object (102) ultrasound waves having emission delays $L^1$ with respect to one another, the emission delays $L^1$ having been determined from the initial emission delays $E^0$ and the complementary emission delays $E^1$,
- instructions (128), to be iterated at least once, wherein the iteration number is denoted $p$, for receiving from the transducers ($114_1...114_N$) new measurement signals $S^p$, measuring echoes due to reflections of the ultrasound waves on the object (102), the ultrasound waves having emission delays $L^p$ with respect to one another, the emission delays $L^p$ having been determined from the initial emission delays $E^0$ and all the complementary emission delays $E^1...E^p$ determined previously,
- instructions (130, 132, 134, 136), to be iterated at least once, for determining new complementary emission delays $E^{p+1}$ from the new measurement signals $S^p$,
- instructions (126), to be iterated at least once, for controlling the transducers ($114_1...114_N$) so that they emit ultrasound waves towards the object (102), the ultrasound waves having emission delays $L^{p+1}$ with respect to one another, the emission delays $L^{p+1}$ having been determined from the initial emission delays $E^0$ and all the complementary emission delays $E^1...E^{p+1}$ determined previously.

## Figure 1

*Figure 2*

## Figure 3

## Figure 4

## Figure 5

## Figure 6

# Figure 7

-106-

$114_1...114_N$

-102-

## Figure 8

## Figure 9

**EP 2 598 871 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060195273 A